# EUROPEAN PATENT APPLICATION

(11) **EP 3 468 181 A1**
(43) Date of publication of application: **10.04.2019**
(21) Application number: 18192836.7
(22) Date of filing: 05.09.2018
(51) Int. Cl.: H04N 7/18, H04N 21/2187, H04N 5/232, G05D 1/00

(54) **DRONE CLOUDS FOR VIDEO CAPTURE AND CREATION**

(30) Priority: 09.10.2017 US 201715727767
(71) Applicant: INTEL Corporation, Santa Clara, CA 95054 (US)
(72) Inventor: KAINE, Greg D., Santa Clara, CA California 95050 (US)
(74) Representative: V.O.

(57) **Abstract**

A mechanism is described for facilitating drone clouds for video capture and creation according to one embodiment. A method of embodiments, as described herein, includes receiving, by a computing device, instructions to track a scene having one or more objects within a physical area. The method may further include generating a guidance plan based on the instructions, where the guidance plan is transmitted over to a drone cloud having multiple drones to perform real-time tracking of the scene, where real-time tracking includes real-time capturing of media of the scene. The method may further include transmitting the media of the scene to one or more media devices over a communication medium.

## Description

### FIELD

Embodiments described herein relate generally to data processing and more particularly to facilitate drone clouds for video capture and creation.

### BACKGROUND

Conventional techniques require large, fixed, and rigid chassis to support a camera array, which, in turn, makes cameras are stationary and cumbersome to use. This lack of flexibility in terms of physical location of the camera array means typically several cameras are needed to obtain varying views or greater capture of large areas or fields.

### BRIEF DESCRIPTION OF THE DRAWINGS

Embodiments are illustrated by way of example, and not by way of limitation, in the figures of the accompanying drawings in which like reference numerals refer to similar elements.
**Figure 1** illustrates a computing device employing a drone cloud mechanism according to one embodiment.
**Figure 2** illustrates a drone cloud mechanism according to one embodiment.
**Figure 3A** illustrates a drone setup having drone cloud media-capturing objects/scenes according to one embodiment.
**Figure 3B** illustrates a drone setup having drone cloud media-capturing objects/scenes according to one embodiment.
**Figure 4A** illustrates a transaction sequence for video capture and/or creation according to one embodiment.
**Figure 4B** illustrated a method for processing actions by a server computer for video capture and/or creation using a drone cloud according to one embodiment.
**Figure 4C** illustrates a method for drone actions by a drone cloud for video capture and/or creation using the drone cloud according to one embodiment.
**Figure 5** illustrates a computer device capable of supporting and implementing one or more embodiments according to one embodiment.
**Figure 6** illustrates an embodiment of a computing environment capable of supporting and implementing one or more embodiments according to one embodiment.

### DETAILED DESCRIPTION

In the following description, numerous specific details are set forth. However, embodiments, as described herein, may be practiced without these specific details. In other instances, well-known circuits, structures and techniques have not been shown in detail in order not to obscure the understanding of this description.

Embodiments provide for a novel technique for using drone swarms or clouds for capturing and/or creating high-resolution and volumetric videos. In one embodiment, this novel technique of drone clouds is portable, configurable, scalable, and dynamic to support any number of environments. Further, this novel use of drone clouds is inflexible and scalable such that merely a few drones may be necessitated to capture any number and type of views of large areas, such as sports fields, etc., with high level of details and voxel accuracy.

It is contemplated that terms like "request", "query", "job", "work", "work item", and "workload" may be referenced interchangeably throughout this document. Similarly, an "application" or "agent" may refer to or include a computer program, a software application, a game, a workstation application, etc., offered through an application programming interface (API), such as a free rendering API, such as Open Graphics Library (OpenGL®), DirectX® 11, DirectX® 12, etc., where "dispatch" may be interchangeably referred to as "work unit" or "draw" and similarly, "application" may be interchangeably referred to as "workflow" or simply "agent". For example, a workload, such as that of a three-dimensional (3D) game, may include and issue any number and type of "frames" where each frame may represent an image (e.g., sailboat, human face). Further, each frame may include and offer any number and type of work units, where each work unit may represent a part (e.g., mast of sailboat, forehead of human face) of the image (e.g., sailboat, human face) represented by its corresponding frame. However, for the sake of consistency, each item may be referenced by a single term (e.g., "dispatch", "agent", etc.) throughout this document.

In some embodiments, terms like "display screen" and "display surface" may be used interchangeably referring to the visible portion of a display device while the rest of the display device may be embedded into a computing device, such as a smartphone, a wearable device, etc. It is contemplated and to be noted that embodiments are not limited to any particular computing device, software application, hardware component, display device, display screen or surface, protocol, standard, etc. For example, embodiments may be applied to and used with any number and type of real-time applications on any number and type of computers, such as desktops, laptops, tablet computers, smartphones, head-mounted displays and other wearable devices, and/or the like. Further, for example, rendering scenarios for efficient performance using this novel technique may range from simple scenarios, such as desktop compositing, to complex scenarios, such as 3D games, augmented reality applications, etc.

It is to be noted that terms or acronyms like convolutional neural network (CNN), CNN, neural network (NN), NN, deep neural network (DNN), DNN, recurrent neural network (RNN), RNN, and/or the like, may be interchangeably referenced throughout this document. Further, terms like "autonomous machine" or simply "machine", "autonomous vehicle" or simply "vehicle", "autonomous agent" or simply "agent", "autonomous device" or "computing device", "robot", and/or the like, may be interchangeably referenced throughout this document.

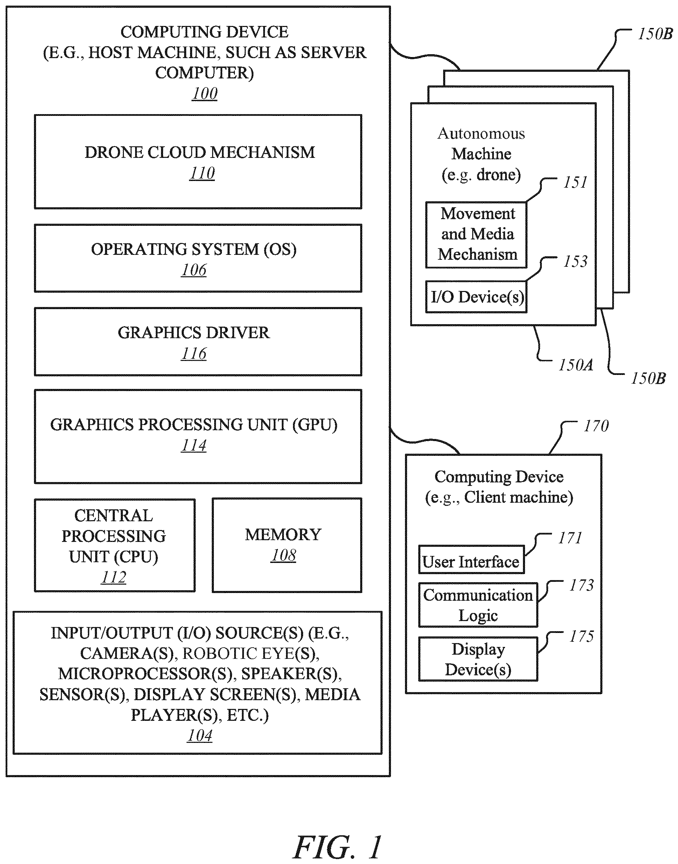

**Figure 1** illustrates a computing device 100 employing a drone cloud mechanism 110 according to one embodiment. Computing device 100 refers to a host machine, such as a server computer for hosting drone cloud mechanism 110. Computing device 100 is shown in communication with other computing devices, such as autonomous machines 150A, 150B, 150N (e.g., drones, flying machines, driving machines, etc.) and computing device 170 (e.g., client machine, such as a client computer, television, mobile device, etc.). Each of computing device 100, autonomous machines 150A-N, and client machine 170 includes a communication and data processing device. For brevity and clarity, computing device 170 are referenced as "client computer", while autonomous machines 150A-N are referenced as "drones" throughout this document; however, as will be described later in this document, embodiments are not limited as such.

In one embodiment, drones 150A-N, as illustrated, represent and are referred to as "drone cloud" (also referred to as "drone swarm", "drone group", "drone team"), but that such drone clouds are not limited any number or type of drones. It is contemplated that a drone cloud may have any number, type, and range of drones capable of performing one or more tasks as described throughout this document. However, for brevity, clarity, and ease of understanding, merely there drones 150A, 150B, and 150N are illustrated and discussed; similarly, movement and media mechanism 151 and any other components, such as I/O device(s) 153 are shown and discussed with reference to drone 150A, but it is contemplated that movement and media mechanism 151, I/O device(s) 153, and any other components and devices may be hosted by or included any of the other drones that are part of a drone cloud, such as drones 150B, 150N of drone cloud 150A-150N.

Client machine 170 may include (without limitations) smart wearable devices, smartphones, virtual reality (VR) devices, head-mounted display (HMDs), mobile computers, Internet of Things (IoT) devices, laptop computers, desktop computers, etc.

Each of drones 150A-N may include (without limitations) an artificially intelligent agent, such as a mechanical agent or machine, an electronics agent or machine, a virtual agent or machine, an electro-mechanical agent or machine, etc. Examples of autonomous machines or artificially intelligent agents may include (without limitation) robots, autonomous vehicles (e.g., drones, self-driving cars, self-flying planes, self-sailing boats, etc.), autonomous equipment (self-operating construction vehicles, self-operating medical equipment, etc.), and/or the like.

Further, although "autonomous vehicle" and "autonomous driving" may be referenced throughout this document, embodiments are not limited as such. For example, "autonomous vehicle" is not limed to a drone or an automobile but that it may include any number and type of autonomous machines, such as robots, autonomous equipment, household autonomous devices, and/or the like, and any one or more tasks or operations relating to such autonomous machines may be interchangeably referenced with autonomous driving.

Computing device 100 may further include (without limitations) large computing systems, such as server computers, desktop computers, etc., and may further include be in communication with set-top boxes (e.g., Internet-based cable television set-top boxes, etc.), global positioning system (GPS)-based devices, etc.

Client machine 170 may include mobile computing devices serving as communication devices, such as cellular phones including smartphones, personal digital assistants (PDAs), tablet computers, laptop computers, e-readers, smart televisions, television platforms, wearable devices (e.g., glasses, watches, bracelets, smartcards, jewelry, clothing items, etc.), media players, etc.

As illustrated, in one embodiment, computing device 100 may include any number and type of hardware and/or software components, such as (without limitation) graphics processing unit ("GPU" or simply "graphics processor") 114, graphics driver (also referred to as "GPU driver", "graphics driver logic", "driver logic", user-mode driver (UMD), UMD, user-mode driver framework (UMDF), UMDF, or simply "driver") 116, central processing unit ("CPU" or simply "application processor") 112, memory 108, network devices, drivers, or the like, as well as input/output (I/O) sources 104, such as touchscreens, touch panels, touch pads, virtual or regular keyboards, virtual or regular mice, ports, connectors, etc. Computing device 100 may include operating system (OS) 106 serving as an interface between hardware and/or physical resources of the computer device 100 and a user.

It is to be appreciated that a lesser or more equipped system than the example described above may be preferred for certain implementations. Therefore, the configuration of computing device 100 may vary from implementation to implementation depending upon numerous factors, such as price constraints, performance requirements, technological improvements, or other circumstances.

Embodiments may be implemented as any or a combination of: one or more microchips or integrated circuits interconnected using a parentboard, hardwired logic, software stored by a memory device and executed by a microprocessor, firmware, an application specific integrated circuit (ASIC), and/or a field programmable gate array (FPGA). The terms "logic", "module", "component", "engine", and "mechanism" may include, by way of example, software or hardware and/or combinations of software and hardware.

In one embodiment, as illustrated, drone cloud mechanism 110 may be hosted by operating system 106 of computing device 100. In another embodiment, drone cloud mechanism 110 may be hosted or facilitated by graphics driver 116. In yet another embodiment, drone cloud mechanism 110 may be hosted by or part of graphics processing unit ("GPU" or simply graphics processor") 114 or firmware of graphics processor 114. For example, drone cloud mechanism 110 may be embedded in or implemented as part of the processing hardware of graphics processor 114. Similarly, in yet another embodiment, drone cloud mechanism 110 may be hosted by or part of central processing unit ("CPU" or simply "application processor") 112. For example, drone cloud mechanism 110 may be embedded in or implemented as part of the processing hardware of application processor 112.

In yet another embodiment, drone cloud mechanism 110 may be hosted by or part of any number and type of components of computing device 100, such as a portion of drone cloud mechanism 110 may be hosted by or part of operating system 116, another portion may be hosted by or part of graphics processor 114, another portion may be hosted by or part of application processor 112, while one or more portions of view synthesis mechanism 110 may be hosted by or part of operating system 116 and/or any number and type of devices of computing device 100. It is contemplated that embodiments are not limited to any particular implementation or hosting of drone cloud mechanism 110 and that one or more portions or components of drone cloud mechanism 110 may be employed or implemented as hardware, software, or any combination thereof, such as firmware.

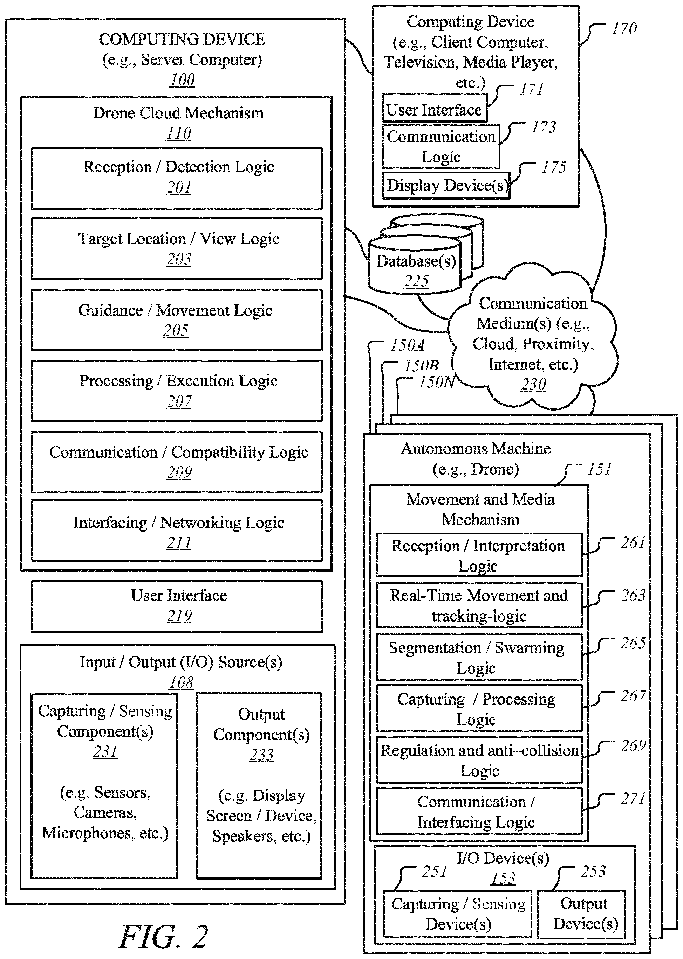

In one embodiment, as will be further described with reference to **Figure 2****,** drone 150A (as well as drones 150B, 150N) may host movement and media mechanism 151 and one or more input/output devices 153. Similarly, client machine 170 may offer user interface 171, such as graphics user interface (GUI), web browser, application-based user interface, and/or the like, to allow for user control of movements and other tasks performed by drones 150A-N. Further, client machine 170 may include communication logic 173 to communicate with and/or access other devices, such as computing device 100. Similarly, client machine 170 may include or be in communication with one or more display devices to display any results of video captured or generated through drones 150A-N and computing 100, as will be further discussed with reference to **Figure 2**.

Computing device 100, drones 150A-N, and client machine 170 may host network interface(s) to provide access to a network, such as a LAN, a wide area network (WAN), a metropolitan area network (MAN), a personal area network (PAN), Bluetooth, a cloud network, a mobile network (e.g., 3^{rd} Generation (3G), 4^{th} Generation (4G), etc.), an intranet, the Internet, etc. Network interface(s) may include, for example, a wireless network interface having antenna, which may represent one or more antenna(e). Network interface(s) may also include, for example, a wired network interface to communicate with remote devices via network cable, which may be, for example, an Ethernet cable, a coaxial cable, a fiber optic cable, a serial cable, or a parallel cable.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection).

Throughout the document, term "user" may be interchangeably referred to as "viewer", "observer", "person", "individual", "end-user", and/or the like. It is to be noted that throughout this document, terms like "graphics domain" may be referenced interchangeably with "graphics processing unit", "graphics processor", or simply "GPU" and similarly, "CPU domain" or "host domain" may be referenced interchangeably with "computer processing unit", "application processor", or simply "CPU".

It is to be noted that terms like "node", "computing node", "server", "server device", "cloud computer", "cloud server", "cloud server computer", "machine", "host machine", "device", "computing device", "computer", "computing system", and the like, may be used interchangeably throughout this document. It is to be further noted that terms like "application", "software application", "program", "software program", "package", "software package", and the like, may be used interchangeably throughout this document. Also, terms like "job", "input", "request", "message", and the like, may be used interchangeably throughout this document.

**Figure 2** illustrates drone cloud mechanism 110 of **Figure** 1 according to one embodiment. For brevity, many of the details already discussed with reference to **Figure** 1 are not repeated or discussed hereafter. In one embodiment, drone cloud mechanism 110 may include any number and type of components, such as (without limitations): reception/detection logic 201; target location/view logic 203; guidance/movement logic 205; processing/execution logic 207; communication/compatibility logic 209; and interfacing/networking logic 211.

Computing device 100 is further illustrated as having access to and/or being in communication with one or more database(s) 225 and/or one or more of other computing devices (e.g., client machine 170, drones 150A-N) over one or more communication medium(s) 230 (e.g., networks such as a cloud network, a proximity network, the Internet, etc.).

In some embodiments, database(s) 225 may include one or more of storage mediums or devices, repositories, data sources, etc., having any amount and type of information, such as data, metadata, etc., relating to any number and type of applications, such as data and/or metadata relating to one or more users, physical locations or areas, applicable laws, policies and/or regulations, user preferences and/or profiles, security and/or authentication data, historical and/or preferred details, and/or the like.

Computing device 100 is shown in communication with client machine 170 which may be accessible to or used by a user to place requests or preferences for drone cloud mechanism 110 through user interface 171, where such requests or preferences are communicated on to drone cloud mechanism 110 at computing device 100 over one or more communication mediums 230, such as a cloud network, a proximity network, the Internet, etc.

For example, in one embodiment, a user having access to client machine 170 (e.g., desktop computer, mobile device, wearable device, etc.) may request or select a mode of drone swarms to follow an object (e.g., fast-speeding car, train, etc.) or an individual (e.g., celebrity, fugitive, etc.) or captures scenes from an event, such as a private event, like a wedding, a party, etc., or a public event, such as a ballgame, a political rally, etc. Such a request or selection may be placed by the user through user interface 171 (e.g., GUI-based user interface, Web browser, cloud-based platform user interface, software application-based user interface, other user or application programming interfaces (APIs) etc.). Such a request may then be communicated over from client machine 170 to drone cloud mechanism 110 at computing device 100 (e.g., server computer) over communication medium(s) 230 (e.g., Internet) using communication logic 173 and communication/compatibility logic 209.

Once the request is received at reception/detection 201 and processed through other components of drone cloud mechanism 110 and movement and media mechanism 151, as will be further described later, the results, such as a video of a sporting event, etc., may be sent back to client machine 170 where it may be shown or displayed using one or more of display devices 175, such as display monitors or screens, projectors, speakers, light-emitting diodes (LEDs), one or more speakers and/or vibration motors, etc. In one embodiment, such results may be broadcast by interfacing/networking logic 211 of computing device 100 to any number and type of client machines, such as television sets around the world.

For example, client machine 170 may include a television set, mobile device, laptop computer, etc., where various scenes from a football game, ranging from the national anthem to the kickoff to the actual game, presentation ceremonies, interviews, etc., may be captured using movement and media mechanism 151 of drone 150, while administered and broadcast by drone cloud mechanism 110 of computing device 100, may then be broadcast by interfacing/networking logic 211 to billions of receiving devices, including client machine 170, around the world to view the captured images or frames of the scenes from the ballpark. This broadcasting may be done using one or more communication mediums 230, such as a television broadcasting network, the Internet, etc. In this case, the user of client machine 170 may use interface 171 for settings and preferences for receiving the broadcast, which he may view through user interface 171 (e.g., web browser) using one or more display devices 175. It is contemplated that in this example, client machine 170 serves as a passive device that is capable of receiving results of images captured by drone 150, but that in some embodiments, client machine 170 may be a controlling device accessible to an administrator being responsible for movement and maneuvering of drone 150.

For example, client machine 170 may be part of a television broadcasting company, where an individual may be responsible for ensuring a proper use of drones 150A-N during the ballgame. In that case, user interface 171 may be used to set preferences or instructions for drone cloud mechanism 110 to prepare guidance and communicate it over to movement and media mechanism 151 of done 150A (and/or other drones 150B-N) to perform certain tasks, such as capturing audio/video of certain scenes or segments of scenes from various angels. The user may view the results of the media captured by drones 150A-N using one or more display devices 175 and use this information to continue to monitor and administer drones 150A-N. In this embodiment, client machine 170 may be regarded as an active or controlling device.

In one embodiment, each of drones 150A-N may host movement and media mechanism 151 and I/O devices 153 (e.g., keyboard, mouse, display screen, speaker, microphone, etc.). It is contemplated that all illustrated devices 100, 150A-N, 170 may contain any number and type of devices and interfaces used for input and/or output of content, etc. For example, I/O source(s) 108 may include capturing/sensing component(s) 231 (e.g., sensors, microphones, cameras, such as e.g., Intel® RealSense™ camera) and/or output component(s) 233 (e.g., speakers, display(s), such as integral displays, tensor displays, projectors, display screens, etc.). Similarly, I/O device(s) 153 include capturing/sensing device(s) 251 (e.g., sensors, microphones, cameras, such as e.g., Intel® RealSense™ camera) and output device(s) 253 (e.g., speakers, display(s), such as integral displays, tensor displays, projectors, display screens, etc.).

For example, capturing/sensing component(s) 231 and/or device(s) 251 may include sensor arrays (such as microphones or microphone array (e.g., ultrasound microphones)), cameras or camera array (e.g., two-dimensional (2D) cameras, three-dimensional (3D) cameras, infrared (IR) cameras, depth-sensing cameras, etc.), capacitors, radio components, radar components, etc.), scanners, accelerometers, etc. Similarly, output component(s) 233 and/or device(s) 253 may include any number and type of display devices or screens, projectors, speakers, light-emitting diodes (LEDs), one or more speakers and/or vibration motors, etc.

For example, a camera of capturing/sensing component(s) 231 and/or device(s) 251 may include any number and type of cameras, such as depth-sensing cameras or capturing devices (e.g., Intel® RealSense™ depth-sensing camera) that are known for capturing still and/or video red-green-blue (RGB) and/or RGB-depth (RGB-D) images for media, such as personal media. Such images, having depth information, have been effectively used for various computer vision and computational photography effects, such as (without limitations) scene understanding, refocusing, composition, cinema-graphs, etc. Similarly, for example, a display device of output component(s) 233 and/or device(s) 253 may include any number and type of displays, such as integral displays, tensor displays, stereoscopic displays, etc., including (but not limited to) embedded or connected display screens, display devices, display projection screens, etc.

In one embodiment, movement and media mechanism 151 being hosted by drone 150 may include any number and type of components, such as (without limitations): reception/interpretation logic 261; real-time movement and tracking logic ("real-time logic") 263; segmentation/swarming logic 265; capturing/processing logic 267; regulation and anti-collision logic 269; and communication/interfacing logic 271.

Embodiments provide for a novel technique to allow for enabling of generation of a point cloud for each captured moment of an object/scene, allowing the synthesis of a virtual camera of output device(s) 253 of one or more drones 150A-N to generate a photorealistic representation of the object/scene from any angle. For example, in one embodiment, video of an object/scene of an event (e.g., sporting events, weddings, political rallies, private parties, business meetings, etc.) may be simultaneously captured from multiple capturing devices, such as multiple cameras of capturing/sensing device(s) 251 of one or more drones 150A-N, that are positioned in different locations and angles (being part of or installed on or embedded in one or more drones 150A-N) though the use of a precisely controlled and managed drone swarm 150A-N.

Embodiments provide capturing simultaneous video streams of the same or different scenes from multiple positions and/or angles without being limited or fixated to physical locations, such as cameras installed in fixed locations. This novel technique offers various degrees of freedom and flexibility in motion to allow any object or scene to be followed by drone cloud 150A-N, while allowing for dynamic configurations of various angles and positions and units within the drone cloud formation.

For example, upon receiving a request from client computer 170 or based on predetermined criteria or trigged by an event, such as reach game time, etc., as received or detected by reception/detection logic 201, any relevant information may then be communicated over to target location/view logic 203. In one embodiment, target location/view logic 203 may access one or more database(s) 225 to obtain any relevant data in response to the information received from reception/detection logic 201, such as to verify the start time of a football game, confirm the segments of the field (including the game, players, crowds, events (e.g., kickoff, fouls, etc.)) that are to be tracked and video-captured, determine which of the video streams are to be processed and/or broadcasted user devices, such as client computer 170, and/or the like. Further, this additional data may include prepared or predetermined plans for events are frequently captured, such as movement routes for one or more drones 150A-N, local rules, regulations, and/or laws or exceptions to them, organizational or individual policies and preferences, system limitations or advantages of one or more drones 150A-N, and/or the like.

In one embodiment, target location/view logic 203 may generate a target plan having movement and media details, such as specifying travel paths, flying altitudes, etc., for drones 150A-N, cameras and/or drones 150A-N that are to be used for capturing videos/images of objects/scenes, views that are to be captured, distance to maintain from the object/scene, time limits, etc. In one embodiment, target location/view logic 203 may forward the target plan to guidance/movement logic 205 for further processing.

Upon receiving the target plan, guidance/movement logic 205 then prepares a guidance plan for drones 150A-N such that the guidance plan includes precise instructions for each of drones 150A-N, ranging precise selection to movement to use of one or more drones 150A-N. For example, one drone 150A may be instructed to close-in on the kicker when the field goal is being kicked, but all drones 150A-N are instructed to participate during the national anthem and post-game ceremonies, etc.

It further provides for improved processes for generating a point cloud, such as drone cloud 150A-N, by including precise spatial data stream describing the location and angle of each camera of one or more drones 150A-N. Further, where depth cameras (such as RGB + depth cameras) of one or more drones 150A-N are used, this novel technique provides for an even greater breadth of data for generating an accurate and precise point cloud composed of any number and type of drones, such as drones 150A-N. Further, communication/compatibility logic 209 may be used to ensure the guidance plan is compatible with drones 150A-N regardless of their make or model.

Once the guidance plan is prepared, it may then be communicated over from interfacing/network logic 211 to reception/interpretation logic 261 of movement and media mechanism 151 at drones 150A-N. As described earlier, for brevity, movement and media mechanism 151 is shown as being hosted by drone 150A, but it contemplated that all drones in the drone cloud 150A-N, such as drones 150B and 150N, may also employ or host movement and media mechanism 151 and any other relevant components or devices, such as I/O device(s) 153.

Upon receiving the guidance plan from interfacing/networking logic 211 over one or more communication medium(s) 230 (e.g., Internet, cloud network, etc.), reception/interpretation logic 261 may then interpret the guidance plan for implementation at and use by drones 150A-N. For example, reception/interpretation logic 261 may review the criteria and/or instructions set forth in the guidance plan and interprets it for real-time logic 263 to perform movement of drones 150A-N and tracking of objects and/or scenes that are to be captured by cameras of capturing/sensing device(s) 251.

Although a sporting event, such as a football game, is being used as an example, embodiments are not limited as such. For example, this novel technique may be used by the local police to track a criminal by simply providing instructions, preferences, and/or profiles through client computer 170 to be processed by drone cloud mechanism 110 and executed by movement and media mechanism 151. For example, one or more of drones 150A-N may be used to track and/or pursue the criminal, as requested by the police and set forth in the guidance plan put together by guidance/movement logic 205 and used by one or more of drones 150A-N.

Continuing with the football example, in one embodiment, upon receiving the interpretation of the guidance plan from reception/interpretation logic 261, real-time logic 263 may be triggered to precisely follow the guidance plan in terms of their movement around the designated area (such as on and around the playing field, etc.) and tracking of objects/scenes (such as individual players, sections of the crowd, segments of the field, certain plays during the game, and portions of the city where the game is being played, etc.).

For example, per the guidance plan, drones 150A-N may swarm in different groups to segment out the objects/scenes, such as drones 150B-N may continue to capture the scenes at the main event, such as at the game/playing field, while drone 150A may segment off on its own or swarm in with other drones to cover events that might be brewing outside the field, such as crowds gathering or celebrating, or simply to capture scenes of city downtown or nearly points of interest, such as beaches, monuments, etc.

In one embodiment, regulation and anti-collision logic 269 may be used to ensure drones 150A-150N comply with all the relevant rules, regulations, laws, organizational/company policies and/or preferences, individual preferences and/or profiles, technical limitations of drones 150A-N, other constraints, such as whether conditions, political environment, etc. Further, regulation and anti-collision logic 269 provides the necessary safety by safeguarding not only drones 150A-N from crashing into structures, crowds, etc., while protecting individuals and properties in the vicinity or proximity of drones 150A-N.

In one embodiment, capturing/processing logic 267 may be used to facilitate one or more of capturing/sensing device(s) 251, such as one or more cameras, to capture video streams or images of the relevant objects and/or scenes as set forth in the guidance plan. These video streams may then be processed by capturing/processing logic 267 according to the guidance plan, such as performing preliminary editing of the video by removing certain irrelevant parts, adding predetermined portions, introducing caption, etc., prior to forwarding the video over to the drone cloud mechanism 110.

For example, once the preliminary processing is performed, communication/interfacing logic 271 may then forward the resulting video streams to reception/detection logic 201 at computing device 100 for further processing. For example, reception/detection logic 201 may forward the video streams to processing/execution logic 207 for additional reviewing and processing of the contents of the video stream for offering final edits to the video streams. Once the video streams are finalized by processing/execution logic 207, they are then forwarded on to interfacing/network logic 211, as facilitated by communication/compatibility logic 209, to communicate or broadcast the video streams at one or more public and/or private devices, such as client computer 170.

In one embodiment, processing/execution logic 207 may determine, based on any predetermined preferences, criteria, agreements, etc., whether and to whom and when one of more of these video streams are to be broadcasted in public or communicated in private.

For example, in case of the football game, unless something extraordinary, sensitive, or illegal is captured (e.g., naked person, riots, foul language, etc.), the video streams would be regarded as appropriate for public broadcasting. However, not all geographic areas may receive these video streams live, such as the city where the game is being played might not receive the live broadcast, while other cities do.

Similarly, continuing with the police example, not all information about tracking or chasing of the criminal might be appropriate. For example, in some embodiments, the information may be shared only with the police through one or more of the police-accessible devices, such as client computer 170. In other cases, chasing the criminal, like the football game, may be broadcast live on public devices, such as televisions, mobile devices, computers, etc., such as client computer 170.

Moreover, in one embodiment, depth information, such as RGB-D cameras, as captured by one or more sensors of capturing/sensing device(s) 251 corresponding to specific pixels of captured images may be used to generate precise locations for each voxel within the point cloud of drones 150A-N, where these precise locations may be obtained through triangulated locations as computed by capturing/processing logic 267 in communication with the corresponding cameras of drones 150A-N in the swarm whose view of the target pixels is not occluded.

As discussed about, in one embodiment, real-time logic 263 may be used for real-time tracking of moving objects or scenes (such as the example of the criminal running from the police or a dog running away from home or a marathon runner, etc.) in any open space that is sufficiently open to allow the operation of drone cloud 150A-N. This novel technique eliminates the conventional need for expensive and inflexible structures to support and hold cameras and other relevant equipment. Further, this novel technique allows for production studios to generate volumetric virtual reality (VR) videos on location in any environment, as opposed to being confined to a fixed studio environment. Using this novel technique, even small businesses and individuals may create their own volumetric VR videos in locations of their choosing. Embodiments provide for a portable, configurable, scalable, and dynamic technique that supports different environments.

Capturing/sensing component(s) 231 and/or device(s) 251 may further include one or more of vibration components, tactile components, conductance elements, biometric sensors, chemical detectors, signal detectors, electroencephalography, functional near-infrared spectroscopy, wave detectors, force sensors (e.g., accelerometers), illuminators, eye-tracking or gaze-tracking system, head-tracking system, etc., that may be used for capturing any amount and type of visual data, such as images (e.g., photos, videos, movies, audio/video streams, etc.), and non-visual data, such as audio streams or signals (e.g., sound, noise, vibration, ultrasound, etc.), radio waves (e.g., wireless signals, such as wireless signals having data, metadata, signs, etc.), chemical changes or properties (e.g., humidity, body temperature, etc.), biometric readings (e.g., figure prints, etc.), brainwaves, brain circulation, environmental/weather conditions, maps, etc. It is contemplated that "sensor" and "detector" may be referenced interchangeably throughout this document. It is further contemplated that one or more capturing/sensing component(s) 231 and/or device(s) 251 may further include one or more of supporting or supplemental devices for capturing and/or sensing of data, such as illuminators (e.g., IR illuminator), light fixtures, generators, sound blockers, etc.

It is further contemplated that in one embodiment, capturing/sensing component(s) 231 and/or device(s) 251 may further include any number and type of context sensors (e.g., linear accelerometer) for sensing or detecting any number and type of contexts (e.g., estimating horizon, linear acceleration, etc., relating to a mobile computing device, etc.). For example, capturing/sensing component(s) 231 and/or device(s) 251 may include any number and type of sensors, such as (without limitations): accelerometers (e.g., linear accelerometer to measure linear acceleration, etc.); inertial devices (e.g., inertial accelerometers, inertial gyroscopes, micro-electro-mechanical systems (MEMS) gyroscopes, inertial navigators, etc.); and gravity gradiometers to study and measure variations in gravitation acceleration due to gravity, etc.

Further, for example, capturing/sensing component(s) 231 and/or device(s) 251 may include (without limitations): audio/visual devices (e.g., cameras, microphones, speakers, etc.); context-aware sensors (e.g., temperature sensors, facial expression and feature measurement sensors working with one or more cameras of audio/visual devices, environment sensors (such as to sense background colors, lights, etc.); biometric sensors (such as to detect fingerprints, etc.), calendar maintenance and reading device), etc.; global positioning system (GPS) sensors; resource requestor; and/or TEE logic. TEE logic may be employed separately or be part of resource requestor and/or an I/O subsystem, etc. Capturing/sensing component(s) 231 and/or device(s) 251 may further include voice recognition devices, photo recognition devices, facial and other body recognition components, voice-to-text conversion components, etc.

Similarly, output component(s) 233 and/or device(s) 253 may include dynamic tactile touch screens having tactile effectors as an example of presenting visualization of touch, where an embodiment of such may be ultrasonic generators that can send signals in space which, when reaching, for example, human fingers can cause tactile sensation or like feeling on the fingers. Further, for example and in one embodiment, output component(s) 233 and/or device(s) 253 may include (without limitation) one or more of light sources, display devices and/or screens, audio speakers, tactile components, conductance elements, bone conducting speakers, olfactory or smell visual and/or non/visual presentation devices, haptic or touch visual and/or non-visual presentation devices, animation display devices, biometric display devices, X-ray display devices, high-resolution displays, high-dynamic range displays, multi-view displays, and head-mounted displays (HMDs) for at least one of virtual reality (VR) and augmented reality (AR), etc.

It is contemplated that embodiment are not limited to any particular number or type of use-case scenarios, architectural placements, or component setups; however, for the sake of brevity and clarity, illustrations and descriptions are offered and discussed throughout this document for exemplary purposes but that embodiments are not limited as such. Further, throughout this document, "user" may refer to someone having access to one or more computing devices, such as computing device 100, client computer 170, drones 150A-N, etc., and may be referenced interchangeably with "person", "individual", "human", "him", "her", "child", "adult", "viewer", "player", "gamer", "developer", programmer", and/or the like.

Communication/compatibility logic 209 may be used to facilitate dynamic communication and compatibility between various components, networks, computing devices 170, 150A-N, database(s) 225, and/or communication medium(s) 230, etc., and any number and type of other computing devices (such as wearable computing devices, mobile computing devices, desktop computers, server computing devices, etc.), processing devices (e.g., central processing unit (CPU), graphics processing unit (GPU), etc.), capturing/sensing components (e.g., non-visual data sensors/detectors, such as audio sensors, olfactory sensors, haptic sensors, signal sensors, vibration sensors, chemicals detectors, radio wave detectors, force sensors, weather/temperature sensors, body/biometric sensors, scanners, etc., and visual data sensors/detectors, such as cameras, etc.), user/context-awareness components and/or identification/verification sensors/devices (such as biometric sensors/detectors, scanners, etc.), memory or storage devices, data sources, and/or database(s) (such as data storage devices, hard drives, solid-state drives, hard disks, memory cards or devices, memory circuits, etc.), network(s) (e.g., Cloud network, Internet, Internet of Things, intranet, cellular network, proximity networks, such as Bluetooth, Bluetooth low energy (BLE), Bluetooth Smart, Wi-Fi proximity, Radio Frequency Identification, Near Field Communication, Body Area Network, etc.), wireless or wired communications and relevant protocols (e.g., Wi-Fi®, WiMAX, Ethernet, etc.), connectivity and location management techniques, software applications/websites, (e.g., social and/or business networking websites, business applications, games and other entertainment applications, etc.), programming languages, etc., while ensuring compatibility with changing technologies, parameters, protocols, standards, etc.

Throughout this document, terms like "logic", "component", "module", "framework", "engine", "tool", and/or the like, may be referenced interchangeably and include, by way of example, software, hardware, and/or any combination of software and hardware, such as firmware. In one example, "logic" may refer to or include a software component that is capable of working with one or more of an operating system, a graphics driver, etc., of a computing device, such as computing devices 100, 170, 150A-N. In another example, "logic" may refer to or include a hardware component that is capable of being physically installed along with or as part of one or more system hardware elements, such as an application processor, a graphics processor, etc., of a computing device, such as computing devices 100, 170, 150A-N. In yet another embodiment, "logic" may refer to or include a firmware component that is capable of being part of system firmware, such as firmware of an application processor or a graphics processor, etc., of a computing device, such as computing devices 100, 170, 150A-N.

Further, any use of a particular brand, word, term, phrase, name, and/or acronym, such as "autonomous machine", "drone", "drone swarm" "drone cloud", "segmenting", "moving", "capturing", "roaming", "sporting event", "football", "video stream", "video", "image", "frame", "view", "neural network", "CNN", "RealSense™ camera", "real-time", "automatic", "dynamic", "user interface", "camera", "sensor", "microphone", "display screen", "speaker", "verification", "authentication", "privacy", "user", "user profile", "user preference", "sender", "receiver", "personal device", "smart device", "mobile computer", "wearable device", "IoT device", "proximity network", "cloud network", "server computer", etc., should not be read to limit embodiments to software or devices that carry that label in products or in literature external to this document.

It is contemplated that any number and type of components may be added to and/or removed from drone cloud mechanism 110 and/or movement and media mechanism 151 to facilitate various embodiments including adding, removing, and/or enhancing certain features. For brevity, clarity, and ease of understanding of drone cloud mechanism 110 and/or movement and media mechanism 151, many of the standard and/or known components, such as those of a computing device, are not shown or discussed here. It is contemplated that embodiments, as described herein, are not limited to any particular technology, topology, system, architecture, and/or standard and are dynamic enough to adopt and adapt to any future changes.

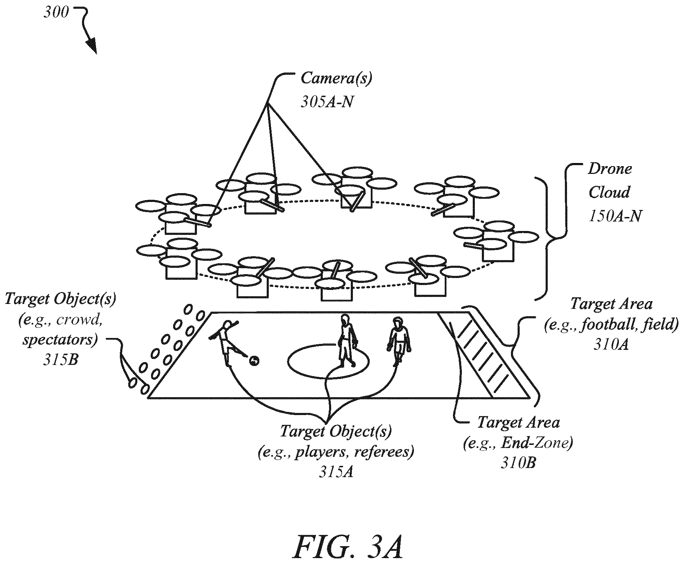

**Figure 3A** illustrates a drone setup 300 having drone cloud 150A-N for tracking and media-capturing of scenes having objects within an area according to one embodiment. For brevity, many of the details previously discussed with reference to **Figures 1-2** may not be discussed or repeated hereafter. Any processes or transactions relating to the illustrated setup 300 may be performed by processing logic that may comprise hardware (e.g., circuitry, dedicated logic, programmable logic, etc.), software (such as instructions run on a processing device), or a combination thereof, as facilitated by drone cloud mechanism 110 and/or movement and media mechanism 151 of **Figure 1**. The processes or transactions associated with this illustration may be illustrated or recited in linear sequences for brevity and clarity in presentation; however, it is contemplated that any number of them can be performed in parallel, asynchronously, or in different orders.

As illustrated, in one embodiment, drone cloud 150A-N may include any number and type of drones, where each drone of drone cloud 150A-N may have one or more cameras 305AN to capture one or more images and/or video streams of scenes/objects 315A, 315B in and around areas 310A, 310B. For example, one or more drones of drone cloud 150A-N may be assigned to cover a football game being played at a football field representing target area 310A. Similarly, as described with reference to **Figure 2****,** one or more drones of drone cloud 150A-N may be assigned a smaller target area 310B, such as an end-zone to cover touchdowns and relevant other activities. Continuing with the illustrated, one or more drones of drone cloud 150A-N may cover the on-field activities and objects, such as players, referees, etc., represented as target object(s) 315A, while another one or more drones of drone cloud 150A-N may be assigned to cover other objects around area 310A, such as crowd, spectators, etc., represented as target object(s) 315B.

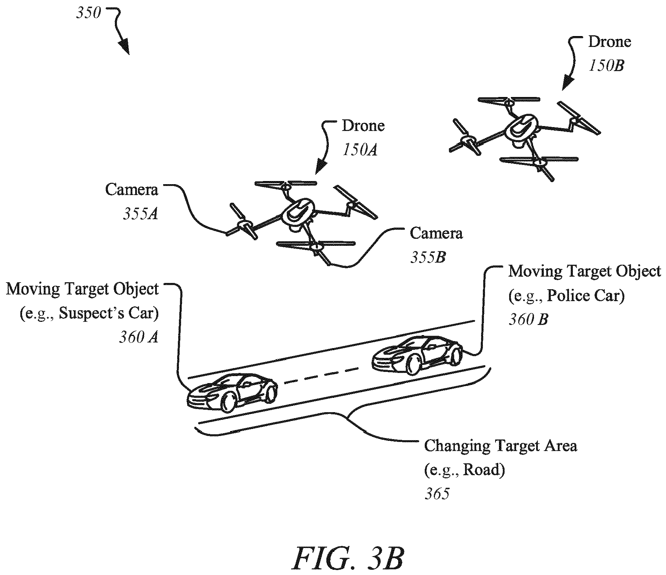

**Figure 3B** illustrates a drone setup 350 having drone cloud 150A, 150B for tracking and media-capturing of scenes having objects within an area according to one embodiment. For brevity, many of the details previously discussed with reference to **Figures 1-3A** may not be discussed or repeated hereafter. Any processes or transactions relating to the illustrated setup 350 may be performed by processing logic that may comprise hardware (e.g., circuitry, dedicated logic, programmable logic, etc.), software (such as instructions run on a processing device), or a combination thereof, as facilitated by drone cloud mechanism 110 and/or movement and media mechanism 151 of **Figure 1**. The processes or transactions associated with this illustration may be illustrated or recited in linear sequences for brevity and clarity in presentation; however, it is contemplated that any number of them can be performed in parallel, asynchronously, or in different orders.

In the illustrated embodiment, target objects are fast moving objects, such as target moving objects 360A, 360B. It is contemplated that embodiments are in no way limited to this or any other illustrations, such as there is no need for a police car represented by target moving object 360B or any of the other components in the illustration. In this illustrated embodiment, however, drone 150A, using its cameras 355A, 355B, may be assigned to over the immediate road, which is continuously changing and is represented as changing target area 365, along with any target moving objects 360A, 360B.

In one embodiment, drone 150B may be given the task of observing the scene from a greater distance having a better and wider view of the relevant activities. Any results obtained from drones 150A, 150B and any other drones involved in this operation may report their observations back to one or more computing devices accessible to the police, such as a desktop at a police station, a mobile phone accessible by a police captain, etc.

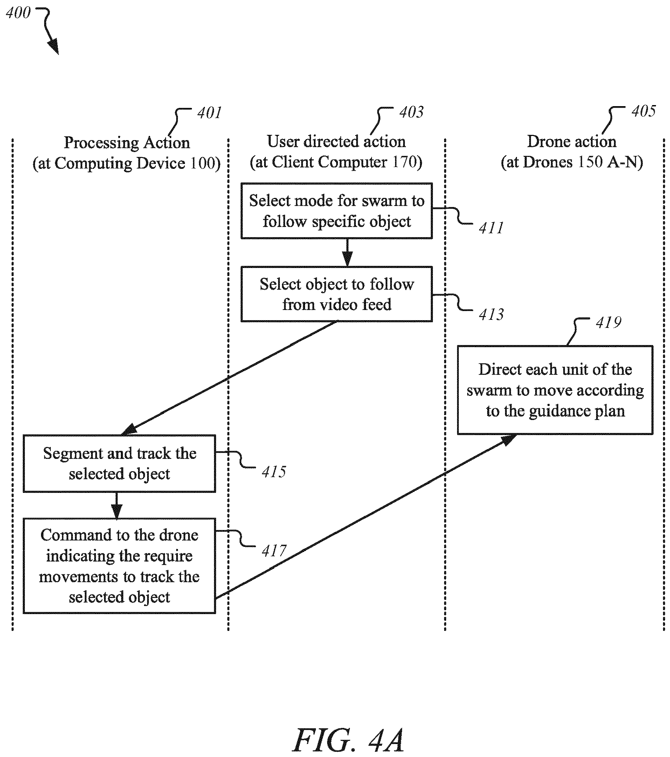

**Figure 4A** illustrates a transaction sequence 400 for media capture and/or creation according to one embodiment. For brevity, many of the details previously discussed with reference to **Figures 1-3B** may not be discussed or repeated hereafter. Any processes or transactions relating to the illustrated cinematic space-time view synthesis may be performed by processing logic that may comprise hardware (e.g., circuitry, dedicated logic, programmable logic, etc.), software (such as instructions run on a processing device), or a combination thereof, as facilitated by drone cloud mechanism 110 and/or movement and media mechanism 151 of **Figure 1**. The processes or transactions associated with this illustration may be illustrated or recited in linear sequences for brevity and clarity in presentation; however, it is contemplated that any number of them can be performed in parallel, asynchronously, or in different orders.

In the illustrated embodiment, transaction sequence 400 is spread over processing actions 401, user-directed actions 403, and drone actions 405 primary performed by computing device 100, client computer 170, and drones 150A-N, respectively, of **Figure 2**. In one embodiment, a user having access to client computer 170 of **Figure 2** may select a mode for drone swarm, such as drone swarm 150A-N, to follow a specific object at 411, where this may be performed by selecting the mode on a website offered through a web browser or through a drop-down menu provided by an application-based software, etc. Once the mode is selected, the user may then select the object to follow from video feed so that that user may continue to watch and keep track of the object as it is being tracked and video-captured using one or more drones 150A-N at 413.

At computing device 100 of **Figure 2**, the target object, as specified by the user via client computer 170 of **Figure 2**, is then segmented for tracking and media-capturing of scenes using one or more drones 150A-N at 415. At 417, a command requesting and/or guiding tracking and media-capturing of the object and any corresponding movements of one or more drones 150A-N is sent from computing device 100 to drones 150A-N. At 419, in response to the command, each of drones 150A-N is instructed to move about for tracking and media-capturing the object according to the guidance included in or associated with the command.

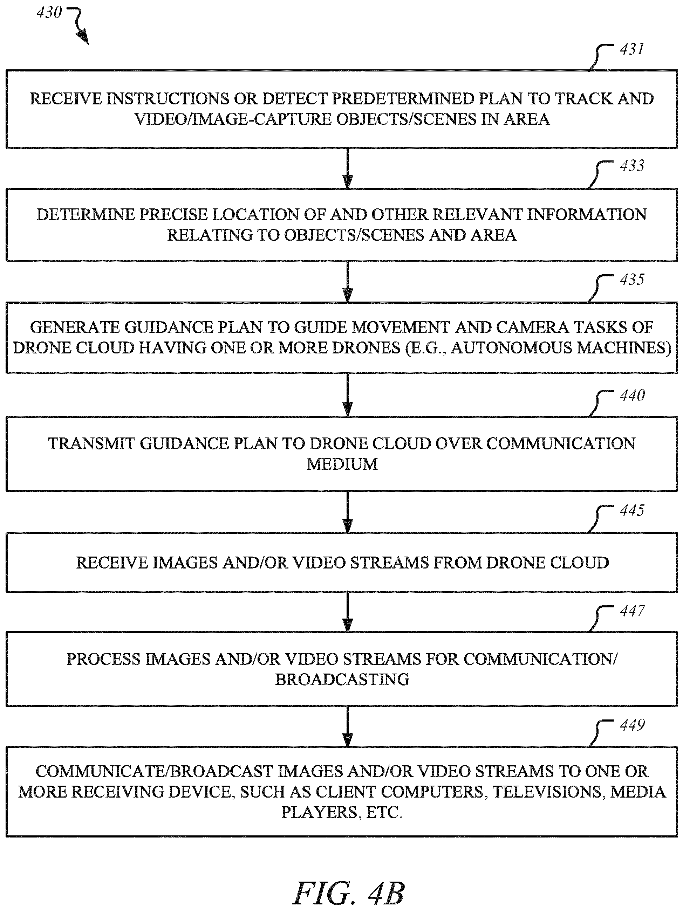

**Figure 4B** illustrates a method 430 for processing actions by a server computer for media capture and/or creation using a drone cloud according to one embodiment. For brevity, many of the details previously discussed with reference to **Figures 1-3B** may not be discussed or repeated hereafter. Any processes or transactions relating to the illustrated cinematic space-time view synthesis may be performed by processing logic that may comprise hardware (e.g., circuitry, dedicated logic, programmable logic, etc.), software (such as instructions run on a processing device), or a combination thereof, as facilitated by drone cloud mechanism 110 and/or movement and media mechanism 151 of **Figure 4A**. The processes or transactions associated with this illustration may be illustrated or recited in linear sequences for brevity and clarity in presentation; however, it is contemplated that any number of them can be performed in parallel, asynchronously, or in different orders.

Method 430 begins at block 431 with receiving of instructions (from a client computer) or detection of a predetermined plan for tracking and video/image-capturing of objects/scenes within an area. At block 433, precise locations of and other relevant information (e.g., policies, preferences, local laws, regulations, etc.) relating to the objects/scenes, the area, and one or more drone clouds are determined or obtained. At block 435, a guidance plan is generated to guide movement and camera tasks of a drone cloud having one or more drones (e.g., autonomous machines). At block 440, the guidance plan is transmitted from the server computer to the drone cloud over a communication medium to instruct and help the drone cloud with tracking and media-capturing the scenes/objects and its relevant movements.

At block 445, images and/or video streams associated with tacking and media-capturing of the objects and/or scenes are received from the drone cloud. At block 447, these images and/or video streams are processed for communication and/or broadcasting using one or more client computers (e.g., personal computer, television, mobile computer, etc.). At block 449, these images and/or video streams are communicated on to the one or more client computers where this information is broadcasted.

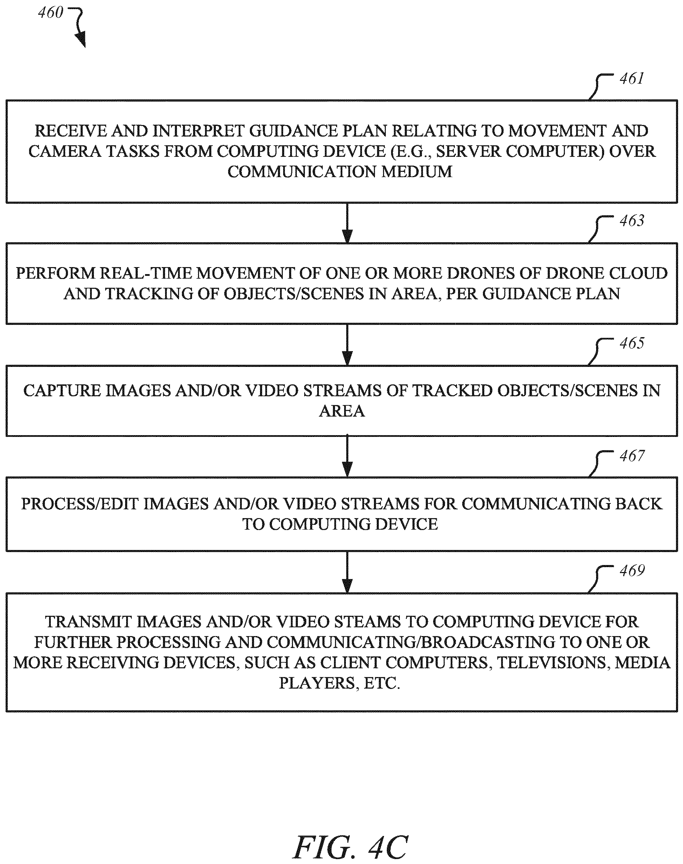

**Figure 4C** illustrates a method 460 for drone actions by a drone cloud for video capture and/or creation using the drone cloud according to one embodiment. For brevity, many of the details previously discussed with reference to **Figures 1-4A** may not be discussed or repeated hereafter. Any processes or transactions relating to the illustrated cinematic space-time view synthesis may be performed by processing logic that may comprise hardware (e.g., circuitry, dedicated logic, programmable logic, etc.), software (such as instructions run on a processing device), or a combination thereof, as facilitated by drone cloud mechanism 110 and/or movement and media mechanism 151 of **Figure 4A**. The processes or transactions associated with this illustration may be illustrated or recited in linear sequences for brevity and clarity in presentation; however, it is contemplated that any number of them can be performed in parallel, asynchronously, or in different orders.

Method 460 begins at block 461 with receiving and interpreting a guidance plan relating to movement and camera tasks from a server computer. At block 463, real-time movement of one or more drones of the drone cloud and tracking of the objects/scenes in an area are performed, per the guidance plan. At block 465, images and/or video streams of the tracked objects/scenes in the area are captured using one or more cameras at one or more drones of the drone cloud. At 467, the image and/or video streams are then processed and edited for typos, mistakes, removal unnecessary or irrelevant data, addition of necessary and relevant data, etc. At block 469, a file of processed images and/or video streams is transmitted over to the server computer for further processing and private and/or public communicating/broadcasting.

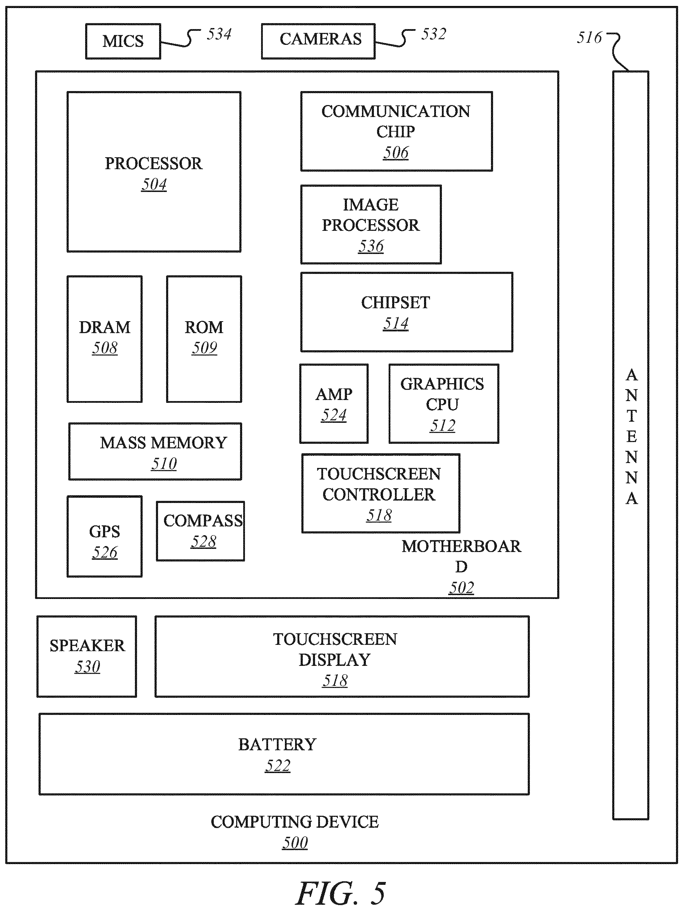

**Figure 5** illustrates a computing device 500 in accordance with one implementation. The illustrated computing device 500 may be the same as or similar to computing device 100 of **Figure 1**. The computing device 500 houses a system board 502. The board 502 may include a number of components, including but not limited to a processor 504 and at least one communication package 506. The communication package is coupled to one or more antennas 516. The processor 504 is physically and electrically coupled to the board 502.

Depending on its applications, computing device 500 may include other components that may or may not be physically and electrically coupled to the board 502. These other components include, but are not limited to, volatile memory (e.g., DRAM) 508, non-volatile memory (e.g., ROM) 509, flash memory (not shown), a graphics processor 512, a digital signal processor (not shown), a crypto processor (not shown), a chipset 514, an antenna 516, a display 518 such as a touchscreen display, a touchscreen controller 520, a battery 522, an audio codec (not shown), a video codec (not shown), a power amplifier 524, a global positioning system (GPS) device 526, a compass 528, an accelerometer (not shown), a gyroscope (not shown), a speaker 530, cameras 532, a microphone array 534, and a mass storage device (such as hard disk drive) 510, compact disk (CD) (not shown), digital versatile disk (DVD) (not shown), and so forth). These components may be connected to the system board 502, mounted to the system board, or combined with any of the other components.

The communication package 506 enables wireless and/or wired communications for the transfer of data to and from the computing device 500. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication package 506 may implement any of a number of wireless or wired standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, Ethernet derivatives thereof, as well as any other wireless and wired protocols that are designated as 3G, 4G, 5G, and beyond. The computing device 500 may include a plurality of communication packages 506. For instance, a first communication package 506 may be dedicated to shorter range wireless communications such as Wi-Fi and Bluetooth and a second communication package 506 may be dedicated to longer range wireless communications such as GPS, EDGE, GPRS, CDMA, WiMAX, LTE, Ev-DO, and others.

The cameras 532 including any depth sensors or proximity sensor are coupled to an optional image processor 536 to perform conversions, analysis, noise reduction, comparisons, depth or distance analysis, image understanding and other processes as described herein. The processor 504 is coupled to the image processor to drive the process with interrupts, set parameters, and control operations of image processor and the cameras. Image processing may instead be performed in the processor 504, the graphics CPU 512, the cameras 532, or in any other device.

In various implementations, the computing device 500 may be a laptop, a netbook, a notebook, an ultrabook, a smartphone, a tablet, a personal digital assistant (PDA), an ultra mobile PC, a mobile phone, a desktop computer, a server, a set-top box, an entertainment control unit, a digital camera, a portable music player, or a digital video recorder. The computing device may be fixed, portable, or wearable. In further implementations, the computing device 500 may be any other electronic device that processes data or records data for processing elsewhere.

Embodiments may be implemented using one or more memory chips, controllers, CPUs (Central Processing Unit), microchips or integrated circuits interconnected using a motherboard, an application specific integrated circuit (ASIC), and/or a field programmable gate array (FPGA). The term "logic" may include, by way of example, software or hardware and/or combinations of software and hardware.

References to "one embodiment", "an embodiment", "example embodiment", "various embodiments", etc., indicate that the embodiment(s) so described may include particular features, structures, or characteristics, but not every embodiment necessarily includes the particular features, structures, or characteristics. Further, some embodiments may have some, all, or none of the features described for other embodiments.

In the following description and claims, the term "coupled" along with its derivatives, may be used. "Coupled" is used to indicate that two or more elements co-operate or interact with each other, but they may or may not have intervening physical or electrical components between them.

As used in the claims, unless otherwise specified, the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Embodiments may be provided, for example, as a computer program product which may include one or more transitory or non-transitory machine-readable storage media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

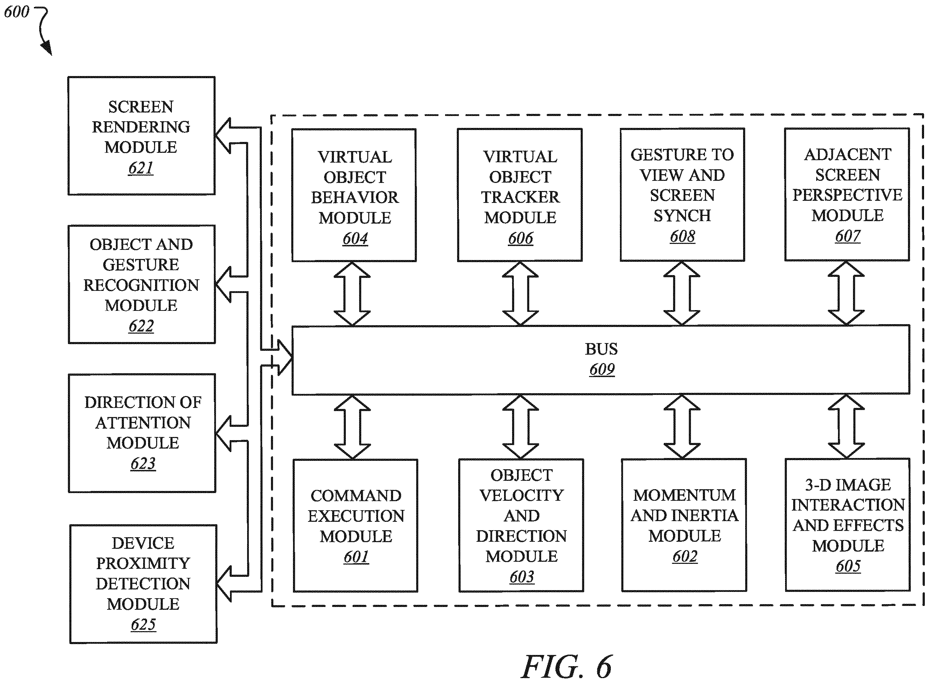

**Figure** 6 illustrates an embodiment of a computing environment 600 capable of supporting the operations discussed above. The modules and systems can be implemented in a variety of different hardware architectures and form factors including that shown in **Figure 5****.**

The Command Execution Module 601 includes a central processing unit to cache and execute commands and to distribute tasks among the other modules and systems shown. It may include an instruction stack, a cache memory to store intermediate and final results, and mass memory to store applications and operating systems. The Command Execution Module may also serve as a central coordination and task allocation unit for the system.

The Screen Rendering Module 621 draws objects on the one or more multiple screens for the user to see. It can be adapted to receive the data from the Virtual Object Behavior Module 604, described below, and to render the virtual object and any other objects and forces on the appropriate screen or screens. Thus, the data from the Virtual Object Behavior Module would determine the position and dynamics of the virtual object and associated gestures, forces and objects, for example, and the Screen Rendering Module would depict the virtual object and associated objects and environment on a screen, accordingly. The Screen Rendering Module could further be adapted to receive data from the Adjacent Screen Perspective Module 607, described below, to either depict a target landing area for the virtual object if the virtual object could be moved to the display of the device with which the Adjacent Screen Perspective Module is associated. Thus, for example, if the virtual object is being moved from a main screen to an auxiliary screen, the Adjacent Screen Perspective Module 2 could send data to the Screen Rendering Module to suggest, for example in shadow form, one or more target landing areas for the virtual object on that track to a user's hand movements or eye movements.

The Object and Gesture Recognition Module 622 may be adapted to recognize and track hand and arm gestures of a user. Such a module may be used to recognize hands, fingers, finger gestures, hand movements and a location of hands relative to displays. For example, the Object and Gesture Recognition Module could for example determine that a user made a body part gesture to drop or throw a virtual object onto one or the other of the multiple screens, or that the user made a body part gesture to move the virtual object to a bezel of one or the other of the multiple screens. The Object and Gesture Recognition System may be coupled to a camera or camera array, a microphone or microphone array, a touch screen or touch surface, or a pointing device, or some combination of these items, to detect gestures and commands from the user.

The touch screen or touch surface of the Object and Gesture Recognition System may include a touch screen sensor. Data from the sensor may be fed to hardware, software, firmware or a combination of the same to map the touch gesture of a user's hand on the screen or surface to a corresponding dynamic behavior of a virtual object. The sensor date may be used to momentum and inertia factors to allow a variety of momentum behavior for a virtual object based on input from the user's hand, such as a swipe rate of a user's finger relative to the screen. Pinching gestures may be interpreted as a command to lift a virtual object from the display screen, or to begin generating a virtual binding associated with the virtual object or to zoom in or out on a display. Similar commands may be generated by the Object and Gesture Recognition System using one or more cameras without the benefit of a touch surface.

The Direction of Attention Module 623 may be equipped with cameras or other sensors to track the position or orientation of a user's face or hands. When a gesture or voice command is issued, the system can determine the appropriate screen for the gesture. In one example, a camera is mounted near each display to detect whether the user is facing that display. If so, then the direction of attention module information is provided to the Object and Gesture Recognition Module 622 to ensure that the gestures or commands are associated with the appropriate library for the active display. Similarly, if the user is looking away from all of the screens, then commands can be ignored.

The Device Proximity Detection Module 625 can use proximity sensors, compasses, GPS (global positioning system) receivers, personal area network radios, and other types of sensors, together with triangulation and other techniques to determine the proximity of other devices. Once a nearby device is detected, it can be registered to the system and its type can be determined as an input device or a display device or both. For an input device, received data may then be applied to the Object Gesture and Recognition Module 622. For a display device, it may be considered by the Adjacent Screen Perspective Module 607.

The Virtual Object Behavior Module 604 is adapted to receive input from the Object Velocity and Direction Module, and to apply such input to a virtual object being shown in the display. Thus, for example, the Object and Gesture Recognition System would interpret a user gesture and by mapping the captured movements of a user's hand to recognized movements, the Virtual Object Tracker Module would associate the virtual object's position and movements to the movements as recognized by Object and Gesture Recognition System, the Object and Velocity and Direction Module would capture the dynamics of the virtual object's movements, and the Virtual Object Behavior Module would receive the input from the Object and Velocity and Direction Module to generate data that would direct the movements of the virtual object to correspond to the input from the Object and Velocity and Direction Module.

The Virtual Object Tracker Module 606 on the other hand may be adapted to track where a virtual object should be located in three-dimensional space in a vicinity of a display, and which body part of the user is holding the virtual object, based on input from the Object and Gesture Recognition Module. The Virtual Object Tracker Module 606 may for example track a virtual object as it moves across and between screens and track which body part of the user is holding that virtual object. Tracking the body part that is holding the virtual object allows a continuous awareness of the body part's air movements, and thus an eventual awareness as to whether the virtual object has been released onto one or more screens.

The Gesture to View and Screen Synchronization Module 608, receives the selection of the view and screen or both from the Direction of Attention Module 623 and, in some cases, voice commands to determine which view is the active view and which screen is the active screen. It then causes the relevant gesture library to be loaded for the Object and Gesture Recognition Module 622. Various views of an application on one or more screens can be associated with alternative gesture libraries or a set of gesture templates for a given view. As an example, in **Figure 1A**, a pinch-release gesture launches a torpedo, but in Figure 1B, the same gesture launches a depth charge.

The Adjacent Screen Perspective Module 607, which may include or be coupled to the Device Proximity Detection Module 625, may be adapted to determine an angle and position of one display relative to another display. A projected display includes, for example, an image projected onto a wall or screen. The ability to detect a proximity of a nearby screen and a corresponding angle or orientation of a display projected therefrom may for example be accomplished with either an infrared emitter and receiver, or electromagnetic or photo-detection sensing capability. For technologies that allow projected displays with touch input, the incoming video can be analyzed to determine the position of a projected display and to correct for the distortion caused by displaying at an angle. An accelerometer, magnetometer, compass, or camera can be used to determine the angle at which a device is being held while infrared emitters and cameras could allow the orientation of the screen device to be determined in relation to the sensors on an adjacent device. The Adjacent Screen Perspective Module 607 may, in this way, determine coordinates of an adjacent screen relative to its own screen coordinates. Thus, the Adjacent Screen Perspective Module may determine which devices are in proximity to each other, and further potential targets for moving one or more virtual objects across screens. The Adjacent Screen Perspective Module may further allow the position of the screens to be correlated to a model of three-dimensional space representing all of the existing objects and virtual objects.

The Object and Velocity and Direction Module 603 may be adapted to estimate the dynamics of a virtual object being moved, such as its trajectory, velocity (whether linear or angular), momentum (whether linear or angular), etc. by receiving input from the Virtual Object Tracker Module. The Object and Velocity and Direction Module may further be adapted to estimate dynamics of any physics forces, by for example estimating the acceleration, deflection, degree of stretching of a virtual binding, etc. and the dynamic behavior of a virtual object once released by a user's body part. The Object and Velocity and Direction Module may also use image motion, size and angle changes to estimate the velocity of objects, such as the velocity of hands and fingers

The Momentum and Inertia Module 602 can use image motion, image size, and angle changes of objects in the image plane or in a three-dimensional space to estimate the velocity and direction of objects in the space or on a display. The Momentum and Inertia Module is coupled to the Object and Gesture Recognition Module 622 to estimate the velocity of gestures performed by hands, fingers, and other body parts and then to apply those estimates to determine momentum and velocities to virtual objects that are to be affected by the gesture.

The 3D Image Interaction and Effects Module 605 tracks user interaction with 3D images that appear to extend out of one or more screens. The influence of objects in the z-axis (towards and away from the plane of the screen) can be calculated together with the relative influence of these objects upon each other. For example, an object thrown by a user gesture can be influenced by 3D objects in the foreground before the virtual object arrives at the plane of the screen. These objects may change the direction or velocity of the projectile or destroy it entirely. The object can be rendered by the 3D Image Interaction and Effects Module in the foreground on one or more of the displays. As illustrated, various components, such as components 601, 602, 603, 604, 605. 606, 607, and 608 are connected via an interconnect or a bus, such as bus 609.

The following clauses and/or examples pertain to further embodiments or examples. Specifics in the examples may be used anywhere in one or more embodiments. The various features of the different embodiments or examples may be variously combined with some features included and others excluded to suit a variety of different applications. Examples may include subject matter such as a method, means for performing acts of the method, at least one machine-readable medium including instructions that, when performed by a machine cause the machine to perform acts of the method, or of an apparatus or system for facilitating hybrid communication according to embodiments and examples described herein.

Some embodiments pertain to
Example 1 that includes an apparatus to facilitate drone clouds for video capture and creation, the apparatus comprising: reception/detection logic to receive instructions to track a scene having one or more objects within a physical area; guidance/movement logic to generate a guidance plan based on the instructions, wherein the guidance plan is transmitted over to a drone cloud having multiple drones to perform real-time tracking of the scene, wherein real-time tracking includes real-time capturing of media of the scene; and interfacing/networking logic to transmit the media of the scene to one or more media devices over a communication medium.
Example 2 includes the subject matter of Example 1, further comprising target location/view logic to seek locations and other specifications of at least one of the scene, the one or more objects of the scene, the area, and one or more portions of the area, wherein the guidance plan is further based on the locations and other specifications.
Example 3 includes the subject matter of Examples 1-2, wherein the guidance plan comprises directions for the drone cloud relating to at least one of vertical and horizontal movement of the multiple drones, tracking information relating to the scene, the one or more objects, and the area, legal restrictions, policy constraints, preferences or special instructions, weather reports, or environmental conditions.
Example 4 includes the subject matter of Examples 1-3, wherein the guidance plan further comprises commands including segmentation commands to instruct one or more drones of the multiple drones to segment away from other drones of the multiple drones to perform tracking a portion of the one or more portions of the area or head towards another scene different from the scene.
Example 5 includes the subject matter of Examples 1-4, further comprising processing/execution logic to perform one or more of verifying the guidance plan prior to being transmitted to the drone cloud and processing the media upon receiving it from the drone cloud, wherein the processing of the media includes editing portions of the media prior to being transmitted to the one or more media devices.
Example 6 includes the subject matter of Examples 1-5, wherein the media comprises at least one of images and video such that the media is captured by one or more cameras coupled to one or more of the multiple drones of the drone cloud.
Example 7 includes the subject matter of Examples 1-6, wherein the apparatus comprises one or more processors including a graphics processor, wherein the graphics processor is co-located with an application processor on a common semiconductor package.
Some embodiments pertain to Example 8 that includes a method to facilitate drone clouds for video capture and creation, the apparatus comprising: receiving, by a computing device, instructions to track a scene having one or more objects within a physical area; generating a guidance plan based on the instructions, wherein the guidance plan is transmitted over to a drone cloud having multiple drones to perform real-time tracking of the scene, wherein real-time tracking includes real-time capturing of media of the scene; and transmitting the media of the scene to one or more media devices over a communication medium.
Example 9 includes the subject matter of Example 8, further comprising seeking locations and other specifications of at least one of the scene, the one or more objects of the scene, the area, and one or more portions of the area, wherein the guidance plan is further based on the locations and other specifications.
Example 10 includes the subject matter of Examples 8-9, wherein the guidance plan comprises directions for the drone cloud relating to at least one of vertical and horizontal movement of the multiple drones, tracking information relating to the scene, the one or more objects, and the area, legal restrictions, policy constraints, preferences or special instructions, weather reports, or environmental conditions.
Example 11 includes the subject matter of Examples 8-10, wherein the guidance plan further comprises commands including segmentation commands to instruct one or more drones of the multiple drones to segment away from other drones of the multiple drones to perform tracking a portion of the one or more portions of the area or head towards another scene different from the scene.
Example 12 includes the subject matter of Examples 8-11, further comprising performing one or more of verifying the guidance plan prior to being transmitted to the drone cloud and processing the media upon receiving it from the drone cloud, wherein the processing of the media includes editing portions of the media prior to being transmitted to the one or more media devices.
Example 13 includes the subject matter of Examples 8-12, wherein the media comprises at least one of images and video such that the media is captured by one or more cameras coupled to one or more of the multiple drones of the drone cloud.
Example 14 includes the subject matter of Examples 8-13, wherein the computing device comprises one or more processors including a graphics processor, wherein the graphics processor is co-located with an application processor on a common semiconductor package.
Some embodiments pertain to Example 15 that includes a data processing system comprising a computing device having memory coupled to a processor, the processor to: receive instructions to track a scene having one or more objects within a physical area; generate a guidance plan based on the instructions, wherein the guidance plan is transmitted over to a drone cloud having multiple drones to perform real-time tracking of the scene, wherein real-time tracking includes real-time capturing of media of the scene; and transmit the media of the scene to one or more media devices over a communication medium.
Example 16 includes the subject matter of Example 15, wherein the processor is further to seek locations and other specifications of at least one of the scene, the one or more objects of the scene, the area, and one or more portions of the area, wherein the guidance plan is further based on the locations and other specifications.
Example 17 includes the subject matter of Examples 15-16, wherein the guidance plan comprises directions for the drone cloud relating to at least one of vertical and horizontal movement of the multiple drones, tracking information relating to the scene, the one or more objects, and the area, legal restrictions, policy constraints, preferences or special instructions, weather reports, or environmental conditions.
Example 18 includes the subject matter of Examples 15-17, wherein the guidance plan further comprises commands including segmentation commands to instruct one or more drones of the multiple drones to segment away from other drones of the multiple drones to perform tracking a portion of the one or more portions of the area or head towards another scene different from the scene.
Example 19 includes the subject matter of Examples 15-18, further comprising performing one or more of verifying the guidance plan prior to being transmitted to the drone cloud and processing the media upon receiving it from the drone cloud, wherein the processing of the media includes editing portions of the media prior to being transmitted to the one or more media devices.
Example 20 includes the subject matter of Examples 15-19, wherein the media comprises at least one of images and video such that the media is captured by one or more cameras coupled to one or more of the multiple drones of the drone cloud.
Example 21 includes the subject matter of Examples 15-20, wherein the computing device comprises one or more processors including a graphics processor, wherein the graphics processor is co-located with an application processor on a common semiconductor package.
Example 22 includes at least one non-transitory or tangible machine-readable medium comprising a plurality of instructions, when executed on a computing device, to implement or perform a method as claimed in any of claims or examples 8-14.
Example 23 includes at least one machine-readable medium comprising a plurality of instructions, when executed on a computing device, to implement or perform a method as claimed in any of claims or examples 8-14.
Example 24 includes a system comprising a mechanism to implement or perform a method as claimed in any of claims or examples 8-14.
Example 25 includes an apparatus comprising means for performing a method as claimed in any of claims or examples 8-14.
Example 26 includes a computing device arranged to implement or perform a method as claimed in any of claims or examples 8-14.
Example 27 includes a communications device arranged to implement or perform a method as claimed in any of claims or examples 8-14.
Example 28 includes at least one machine-readable medium comprising a plurality of instructions, when executed on a computing device, to implement or perform a method or realize an apparatus as claimed in any preceding claims.
Example 29 includes at least one non-transitory or tangible machine-readable medium comprising a plurality of instructions, when executed on a computing device, to implement or perform a method or realize an apparatus as claimed in any preceding claims.
Example 30 includes a system comprising a mechanism to implement or perform a method or realize an apparatus as claimed in any preceding claims.
Example 31 includes an apparatus comprising means to perform a method as claimed in any preceding claims.
Example 32 includes a computing device arranged to implement or perform a method or realize an apparatus as claimed in any preceding claims.
Example 33 includes a communications device arranged to implement or perform a method or realize an apparatus as claimed in any preceding claims.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. An apparatus to facilitate drone clouds for video capture and creation, the apparatus comprising:
one or more processors to execute:
reception/detection logic to receive instructions to track a scene having one or more objects within a physical area;
guidance/movement logic to generate a guidance plan based on the instructions, wherein the guidance plan is transmitted over to a drone cloud having multiple drones to perform real-time tracking of the scene, wherein real-time tracking includes real-time capturing of media of the scene; and
interfacing/networking logic to transmit the media of the scene to one or more media devices over a communication medium.

2. The apparatus of claim 1, wherein the one or more processors to execute target location/view logic to seek locations and other specifications of at least one of the scene, the one or more objects of the scene, the area, and one or more portions of the area, wherein the guidance plan is further based on the locations and other specifications.

3. The apparatus of claim 1, wherein the guidance plan comprises directions for the drone cloud relating to at least one of vertical and horizontal movement of the multiple drones, tracking information relating to the scene, the one or more objects, and the area, legal restrictions, policy constraints, preferences or special instructions, weather reports, or environmental conditions, wherein the guidance plan further comprises commands including segmentation commands to instruct one or more drones of the multiple drones to segment away from other drones of the multiple drones to perform tracking a portion of the one or more portions of the area or head towards another scene different from the scene.

4. The apparatus of claim 1, wherein the one or more processors to execute processing/execution logic to perform one or more of verifying the guidance plan prior to being transmitted to the drone cloud and processing the media upon receiving it from the drone cloud, wherein the processing of the media includes editing portions of the media prior to being transmitted to the one or more media devices, wherein the media comprises at least one of images and video such that the media is captured by one or more cameras coupled to one or more of the multiple drones of the drone cloud.

5. The apparatus of claim 1, wherein the apparatus comprises one or more processors including a graphics processor, wherein the graphics processor is co-located with an application processor on a common semiconductor package.

6. A method for facilitating drone clouds for video capture and creation, the method comprising:
receiving, by a computing device, instructions to track a scene having one or more objects within a physical area;
generating a guidance plan based on the instructions, wherein the guidance plan is transmitted over to a drone cloud having multiple drones to perform real-time tracking of the scene, wherein real-time tracking includes real-time capturing of media of the scene; and
transmitting the media of the scene to one or more media devices over a communication medium.

7. The method of claim 6, further comprising seeking locations and other specifications of at least one of the scene, the one or more objects of the scene, the area, and one or more portions of the area, wherein the guidance plan is further based on the locations and other specifications.

8. The method of claim 6, wherein the guidance plan comprises directions for the drone cloud relating to at least one of vertical and horizontal movement of the multiple drones, tracking information relating to the scene, the one or more objects, and the area, legal restrictions, policy constraints, preferences or special instructions, weather reports, or environmental conditions, wherein the guidance plan further comprises commands including segmentation commands to instruct one or more drones of the multiple drones to segment away from other drones of the multiple drones to perform tracking a portion of the one or more portions of the area or head towards another scene different from the scene.

9. The method of claim 6, further comprising performing one or more of verifying the guidance plan prior to being transmitted to the drone cloud and processing the media upon receiving it from the drone cloud, wherein the processing of the media includes editing portions of the media prior to being transmitted to the one or more media devices, wherein the media comprises at least one of images and video such that the media is captured by one or more cameras coupled to one or more of the multiple drones of the drone cloud.

10. The method of claim 6, wherein the computing device comprises one or more processors including a graphics processor, wherein the graphics processor is co-located with an application processor on a common semiconductor package.

11. At least one machine-readable medium comprising a plurality of instructions, when executed on a computing device, to implement or perform a method as claimed in any of claims 6-10.

12. A system comprising a mechanism to implement or perform a method as claimed in any of claims or examples 6-10.

13. An apparatus comprising means for performing a method as claimed in any of claims or examples 6-10.

14. A computing device arranged to implement or perform a method as claimed in any of claims or examples 6-10.

15. A communications device arranged to implement or perform a method as claimed in any of claims or examples 6-10.
